(19) Europäisches Patentamt
European Patent Office
Office européen des brevets

(11) **EP 4 629 166 A1**

(12) **EUROPEAN PATENT APPLICATION**
published in accordance with Art. 153(4) EPC

(43) Date of publication:
**08.10.2025 Bulletin 2025/41**

(21) Application number: **24821733.3**

(22) Date of filing: **12.09.2024**

(51) International Patent Classification (IPC):
*G06T 5/50* (2006.01)     *G06T 5/70* (2024.01)
*G06V 10/30* (2022.01)     *G06V 40/12* (2022.01)
*G06V 10/82* (2022.01)

(52) Cooperative Patent Classification (CPC):
**G06V 40/1347**

(86) International application number:
**PCT/IB2024/058868**

(87) International publication number:
**WO 2025/168989 (14.08.2025 Gazette 2025/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2024   CN 202410177012**

(71) Applicant: HUIKE (SINGAPORE) HOLDING
PTE.LTD.
Singapore 117586 (SG)

(72) Inventors:
• **NI, Fangyi**
  **Shenzhen, Guangdong 518045 (CN)**
• **HU, Miantao**
  **Shenzhen, Guangdong 518045 (CN)**
• **GUO, Yueyang**
  **Shenzhen, Guangdong 518045 (CN)**

(74) Representative: **Kraus & Lederer PartGmbB
Thomas-Wimmer-Ring 15
80539 München (DE)**

(54) **OBJECT-FREE IMAGE LIBRARY OPTIMIZATION METHOD AND APPARATUS, ELECTRONIC DEVICE, AND STORAGE MEDIUM**

(57)     Embodiments of the present disclosure provide a method for optimizing a base image library, an apparatus for optimizing a base image library, an electronic device, and a storage medium. The method for optimizing a base image library includes: determining a first base image and a plurality of second base images from the base image library, wherein the base image library comprises a plurality of base images collected by a fingerprint sensor from a detection region without a detection object; calculating a difference between the first base image and each of the plurality of second base images respectively, and obtaining a plurality of residual images based on the calculation result; and deleting, in response to determining based on the plurality of residual images that shading interference is present in the first base image, the first base image from the base image library. The method for optimizing a base image library provided in the present disclosure can delete base images with shading interference from the base image library, and can improve the accuracy of fingerprint identification by the fingerprint sensor.

```
┌──────────────────────────────────────────────────────────┐
│ Determining a first base image and a plurality of second   │ ⟋ 101
│ base images from a base image library                      │
└──────────────────────────────────────────────────────────┘
                            ↓
┌──────────────────────────────────────────────────────────┐
│ Calculating a difference between the first base image and   │ ⟋ 102
│ each of the plurality of second base images respectively,   │
│ and obtaining a plurality of residual images based on the   │
│ calculation result                                          │
└──────────────────────────────────────────────────────────┘
                            ↓
┌──────────────────────────────────────────────────────────┐
│ Deleting, in response to determining based on the plurality │ ⟋ 103
│ of residual images that shading interference is present in  │
│ the first base image, the first base image from the base    │
│ image library                                               │
└──────────────────────────────────────────────────────────┘
```

FIG. 1

EP 4 629 166 A1

**Description**

The present disclosure claims priority to Patent Application No. "202410177012.5" titled "METHOD FOR OPTIMIZING BASE IMAGE LIBRARY, APPARATUS FOR OPTIMIZING BASE IMAGE LIBRARY, ELECTRONIC DEVICE, AND STORAGE MEDIUM" and filed on 08 February 2024, the entire content of which is incorporated herein by reference.

TECHNICAL FIELD

Embodiments of the present disclosure relate to the technical field of data processing, and particularly relate to a method for optimizing a base image library, an apparatus for optimizing a base image library, an electronic device, and a storage medium.

BACKGROUND

With the development of the consumer electronics industry, fingerprint identification has become a mainstream security solution for electronic devices. A constant signal interference is present when a fingerprint sensor collects a fingerprint image, for which a base image library is required to be constructed to cache real-time base images for subsequently correcting collected fingerprint images, to remove constant signal interference in the fingerprint images. However, when the fingerprint sensor collects a base image, shading interference will be present in the base image due to interference from a foreign object or other circumstances.

At present, the base image is collected through the fingerprint sensor, is subjected to shading interference detection, and is then stored in the base image library.

However, when shading interference detection is performed on the base image, it is impossible to filter out all background-containing base images, so that the base image library includes base images with shading interference, thereby missing some corrected fingerprint images when the collected fingerprint images are corrected, and resulting in a low identification rate of the fingerprint sensor.

SUMMARY

In view of this, embodiments of the present disclosure provide a method for optimizing a base image library, an apparatus for optimizing a base image library, an electronic device, and a computer storage medium, to at least partially solve the above problems.

According to a first aspect of the embodiments of the present disclosure, a method for optimizing a base image library is provided, including: determining a first base image and a plurality of second base images from the base image library, wherein the base image library comprises a plurality of base images collected by a fingerprint sensor from a detection region without a detection object, and the first base image is different from the second base images; calculating a difference between the first base image and each of the plurality of second base images respectively, and obtaining a plurality of residual images based on the calculation result; and deleting, in response to determining based on the plurality of residual images that shading interference is present in the first base image, the first base image from the base image library.

In a possible implementation, the determining the first base image and the plurality of second base images from the base image library comprises: performing signal interference detection on the plurality of base images included in the base image library, determining a base image with a signal interference detection result greater than a signal interference threshold as the first base image, and determining base images with the signal detection result smaller than or equal to the signal interference threshold as the second base images.

In a possible implementation, the calculating the difference between the first base image and each of the plurality of second base images respectively, and obtaining the plurality of residual images based on the calculation result comprises: calculating the difference between the first base image and each of the plurality of second base images respectively to obtain a plurality of first images, and determining the plurality of first images as the residual images respectively; or selecting a plurality of second images from the plurality of first images, wherein an intensity or number of stripe signals included in the second images is smaller than a preset noise threshold, and determining the plurality of second images as the residual images respectively; or obtaining the plurality of residual images based on the plurality of second images.

In a possible implementation, the selecting the plurality of second images from the plurality of first images comprises: calculating a mean pixel value of pixels in each column in the first images to obtain a mean column pixel value corresponding to the first images; calculating a mean pixel value of pixels in each row in the first images to obtain a mean row pixel value corresponding to the first images; and determining corresponding first images with both the mean column pixel value and the mean row pixel value smaller than the noise threshold among the plurality of first images as the second images.

In a possible implementation, the obtaining the plurality of residual images based on the second images comprises: performing image noise reduction processing on each second image among the plurality of second images to obtain the plurality of residual images.

In a possible implementation, the method further includes: normalizing the plurality of residual images; performing feature extraction on each of the normalized residual images respectively to obtain a feature corresponding to each residual image; and predicting the residual image by at least two fully connected layers based on the feature corresponding to each residual image to obtain a probability that shading interference is present in each residual image, and performing shading interference prediction on the first base image based on the probability that shading interference is present in each residual image among the plurality of residual images, to obtain a prediction result.

In a possible implementation, the performing shading interference prediction on the first base image based on the probability that shading interference is present in each residual image among the plurality of residual images, to obtain the prediction result comprises: calculating a mean value of probabilities that shading interference is present in the plurality of residual images; calculating a standard deviation of the probabilities that shading interference is present in the plurality of residual images based on the mean value; determining a probability that shading interference is present in the first base image based on the mean value and the standard deviation; and determining that shading interference is present in the first base image, in response to the probability that shading interference is present in the first base image being larger than a preset probability threshold.

In a possible implementation, the determining the probability that shading interference is present in the first base image based on the mean value and the standard deviation comprises: performing weighted summation on the mean value and the standard deviation, and determining the weighted summation result as the probability that shading interference is present in the first base image.

In a possible implementation, when the base images stored in the base image library is equal to a preset image number threshold and the base image library receives at least one third base image, the first base images are ranked in descending order of probability that shading interference is present, first base images corresponding to N top-ranked probabilities are deleted, and the at least one third base image is saved in the base image library, wherein N is a positive integer greater than or equal to 1, and N is equal to the number of third base images.

In a possible implementation, the method further includes: inputting the plurality of residual images into a pre-trained shading interference detection network, to obtain a prediction result outputted from the shading interference detection network which indicates whether shading interference is present in the first base image.

According to a second aspect of the embodiments of the present disclosure, an apparatus for optimizing a base image library is provided, including: a determination unit configured to determine a first base image and a plurality of second base images from the base image library, wherein the base image library comprises a plurality of base images collected by a fingerprint sensor from a detection region without a detection object, and the first base image is different from the second base images; a calculation unit configured to calculate a difference between the first base image and each of the plurality of second base images respectively, and obtain a plurality of residual images based on the calculation result; and a deletion unit configured to delete, in response to determining based on the plurality of residual images that shading interference is present in the first base image, the first base image from the base image library.

According to a third aspect of the embodiments of the present disclosure, an electronic device is provided, including: a processor, a memory, a communication interface, and a communication bus, wherein the processor, the memory, and the communication interface implement communication with each other through the communication bus; and the memory is configured to store at least one executable instruction, wherein the executable instruction is executed to cause the processor to execute operations corresponding to the method as described in the first aspect.

According to a fourth aspect of the embodiments of the present disclosure, a computer storage medium is provided, storing a computer program thereon, wherein the program, when executed by a processor, implements the method as described in the first aspect.

According to the solutions for optimizing a base image library provided in the embodiments of the present disclosure, a first base image and a plurality of second base images are determined from the base image library, a difference between the first base image and each of the second base images is calculated respectively to obtain a plurality of residual images, the plurality of residual images are predicted, thereby determining whether shading interference is present in the first base image, shading interference detection may be performed on base images in the base image library, and first base images with shading interference are deleted from the base image library, thereby ensuring that shading interference is not present in base images of the base image library, so that after the fingerprint sensor collects a fingerprint image, the fingerprint image can be corrected based on a base image without shading interference, thereby ensuring the accuracy of the fingerprint image, and improving the identification accuracy of the fingerprint sensor.

BRIEF DESCRIPTION OF DRAWINGS

To more clearly describe technical solutions in embodiments of the present disclosure or the prior art, drawings to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.

FIG. 1 is a flowchart of a method for optimizing a base image library provided in an embodiment of the present disclosure;

FIG. 2 is a flowchart of a method for determining a prediction result provided in an embodiment of the present disclosure;

FIG. 3 is a schematic diagram of an apparatus for optimizing a base image library provided in an embodiment of the present disclosure; and

FIG. 4 is a schematic structural diagram of an electronic device provided in an embodiment of the present disclosure.

DETAILED DESCRIPTION

To enable those skilled in the art to better understand technical solutions of embodiments of the present disclosure, the technical solutions of the embodiments of the present disclosure will be clearly and completely described below with reference to the drawings in the embodiments of the present disclosure. Apparently, the described embodiments are merely some, instead of all, of the embodiments of the present disclosure. All other embodiments obtained by those of ordinary skills in the art based on some embodiments among the embodiments of the present disclosure should be encompassed within the scope of protection of the embodiments of the present disclosure.

The terms used in the present disclosure are intended merely to describe particular embodiments, and are not intended to limit the present disclosure. The singular forms of "a" and "the" used in the present disclosure and the appended claims are also intended to include plural forms, unless the context clearly indicates other meanings. It should be further understood that the term "and/or" used herein refers to and includes any or all possible combinations of one or more associated listed items.

It should be understood that various kinds of information may be described by using the terms, such as first, second, and third, in the present disclosure, but the information should not be limited to these terms. These terms are merely used to distinguish between information of a same type. For example, the first piece of information may also be called the second piece of information, and similarly, the second piece of information may also be called the first piece of information, without departing from the scope of the present disclosure. Depending on the context, as used herein, the word "if" may be interpreted as "at the time of ..." or "when ..." or "in response to determining. "

As mentioned above, with the development of the consumer electronics industry, fingerprint identification has become a mainstream security solution for electronic devices. A constant signal interference is present when a fingerprint sensor collects a fingerprint image, for which a base image library is required to be constructed to cache real-time base images for subsequently correcting collected fingerprint images, to remove constant signal interference in the fingerprint images. However, when the fingerprint sensor collects a base image, shading interference will be present in the base image due to interference from a foreign object or other circumstances. Taking an ultrasonic fingerprint sensor as an example, for example, if a stain, an object, or the like is present in a collection region of the ultrasonic fingerprint sensor, shading interference will be present in base images. At present, the base image is collected through the fingerprint sensor, is subjected to shading interference detection, and is then stored in the base image library. However, when shading interference detection is performed on the base image, it is impossible to filter out all background-containing base images, so that the base image library includes base images with shading interference, thereby missing some corrected fingerprint images when the collected fingerprint images are corrected, and resulting in a low identification rate of the fingerprint sensor.

An embodiment of the present disclosure provides a method for optimizing a base image library, a first base image and a plurality of second base images are determined from the base image library, a difference between the first base image and each of the second base images is calculated respectively to obtain a plurality of residual images, the plurality of residual images are predicted, thereby determining whether shading interference is present in the first base image, shading interference detection may be performed on base images in the base image library, and first base images with shading interference are deleted from the base image library, thereby ensuring that shading interference is not present in base images of the base image library, so that after the fingerprint sensor collects a fingerprint image, the fingerprint image can be corrected based on a base image without shading interference, thereby ensuring the accuracy of the fingerprint image, and improving the identification accuracy of the fingerprint sensor.

The method for optimizing a base image library provided in the present disclosure is illustrated below with reference to embodiments.

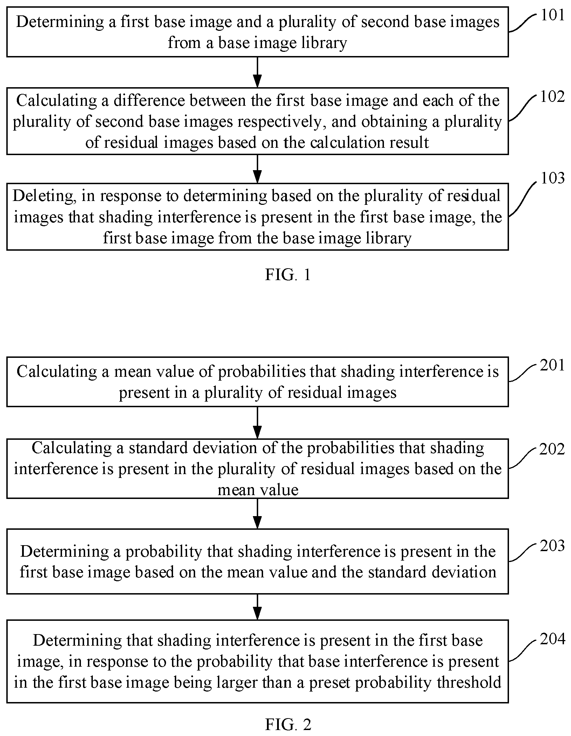

FIG. 1 is a flowchart of a method for optimizing a base image library provided in an embodiment of the present disclosure. As shown in FIG. 1, the method for optimizing a base image library includes steps 101-103 as follows:

Step 101: determining a first base image and a plurality of second base images from the base image library.

The base image library includes a plurality of base images. The base images are images collected by a fingerprint sensor from a detection region without a detection object. For example, among images collected by the fingerprint sensor without a finger, the first base image is different from the second base images. The first base image and the second base images are determined from the base image library of the fingerprint sensor. The first base image is a base image in the base image library, and the second base images are at least some base images except for the first base image in the base image library. For example, if there are 50 base images in the base image, the second base images may be 49 base images except for the first base image, or 24 random images among the 49 base images except for the first base image.

Step 102: calculating a difference between the first base image and each of the plurality of second base images respectively, and obtaining a plurality of residual images based on the calculation result.

The difference between the first base image and each second base image is calculated respectively. In an example, based on each second base image, images same as the second base image included in the first base image may be removed, that is, images different from the first base image are determined from images included in the first base image and images included in each second base image respectively.

After the difference between the first base image and each second base image is calculated, the plurality of residual images are determined based on the calculation result. It should be understood that the number of the plurality of residual images is not constant. For example, the plurality of images after the difference calculation may be determined as the plurality of residual images, that is, if a difference between the first base image and each of 5 second base images is calculated, the number of residual images may be 5. The plurality of residual images may also be images including at least a part of the calculation result after the calculation result is processed, which is not limited in embodiments of the present disclosure.

Step 103: deleting, in response to determining based on the plurality of residual images that shading interference is present in the first base image, the first base image from the base image library.

The first base image is predicted based on the plurality of residual images, to determine whether shading interference is present in the first base image, and obtain a prediction result. It should be understood that the prediction result may be a binary differentiation result, that is, the prediction result is whether shading interference is present in the first base image, or the prediction result may be a probability that shading interference is present in the first base image. The specific form of the prediction result is not limited in the embodiments of the present disclosure.

If shading interference is present in the first base image, the first base image is deleted from the base image library. If shading interference is not present in the first base image, the first base image is retained in the base image library. It should be understood that the first base image without shading interference may be stored in a base image sub-library, and when the base image library is updated, the base image library is updated to the base image sub-library, or the first base image with shading interference may be deleted directly from the base image library.

It should be noted that execution conditions may be set for the steps 101-103. After the execution conditions are satisfied, the steps 101-103 may be executed. The execution conditions include, but are not limited to, a constant period, the number of newly added base images in the base image library satisfying a threshold, and the like.

In an embodiment of the present disclosure, a first base image and a plurality of second base images are determined from the base image library, a difference between the first base image and each of the second base images is calculated respectively to obtain a plurality of residual images, the plurality of residual images are predicted, thereby determining whether shading interference is present in the first base image, shading interference detection may be performed on base images in the base image library, and first base images with shading interference are deleted from the base image library, thereby ensuring that shading interference is not present in base images of the base image library, so that after the fingerprint sensor collects a fingerprint image, the fingerprint image can be corrected based on a base image without shading interference, thereby ensuring the accuracy of the fingerprint image, and improving the identification accuracy of the fingerprint sensor.

In a possible implementation, when the first base image and the plurality of second base images are determined from the base image library, signal interference detection may be performed on the plurality of base images included in the base image library, a base image with a signal interference detection result greater than a signal interference threshold may be determined as the first base image, and base images with signal interference detection results smaller than or equal to the signal interference threshold may be determined as the second base images.

It should be understood that if shading interference is present in a base image, the intensity or number of signal interferences of the base image will be larger than that of signal interferences of a base image without shading interference. Therefore, signal interference detection may be first performed on each base image in the base image library, a base image with the intensity or number of signal interferences larger than the signal interference threshold is selected as the first base image, and base images with the intensity or number of signal interferences smaller than or equal to the signal interference threshold are selected as the second base images.

In an embodiment of the present disclosure, signal interference detection is performed on a plurality of base images included in the base image library, and the base image with the signal interference detection result greater than the signal interference threshold is determined as the first base image, thereby using a base image with a high probability of containing shading interference as the first base image for shading interference detection. Since signal interference detection on a base image requires less computing power and time than shading interference detection on the base image, a base image with a high probability of containing shading interference is used as the first base image for shading interference detection, so that fewer first base images require shading interference detection compared with shading interference detection using all base images as the first base images, and it is not necessary to use all base images in the base image library as the first base images for shading interference detection, thereby improving the efficiency of shading interference detection on the base images in the base image library.

In a possible implementation, when the difference between the first base image and each of the plurality of second base images is calculated respectively, and the plurality of residual images are obtained based on the calculation result, the difference between the first base image and each of the plurality of second base images may be calculated respectively to obtain a plurality of first images, and the plurality of first images may be determined as the residual images respectively; or a plurality of second images may be selected from the plurality of first images, wherein an intensity or number of stripe signals included in the second images is smaller than a preset noise threshold, and the plurality of second images are determined as the residual images respectively; or the plurality of residual images are obtained based on the plurality of second images.

The difference between the first base image and each second base image is calculated respectively to determine the plurality of first images. The number of first images is consistent with the number of second base images. For example, a difference between the first base image and 5 second base images is calculated to determine the 5 first images.

In an optional embodiment, the first images may be determined as the residual images, the difference between the first base image and the plurality of second base images is calculated to eliminate constant signal interference, and the plurality of first images obtained from the difference calculation are determined as the residual images to detect the residual images between the first base image and all of the second base images, so that more residual images are detected, thereby improving the accuracy of shading interference detection on the first base image.

In an optional embodiment, stripe signal detection may be performed on the plurality of first images respectively, and a plurality of second images with the intensity or number of stripe signals smaller than the preset noise threshold may be selected from the plurality of first images. It should be understood that because the constant signal is a stripe signal, the stripe signal is linearly distributed horizontally and/or longitudinally, for example, a stripe noise generated by sound wave diffraction at an edge of an image, a fixed dead pixel, a stripe noise formed at an edge of the fingerprint sensor or at an edge of a screen when the fingerprint sensor collects a base image, etc., and the difference is calculated to eliminate the constant signal. Therefore, a first image with an intensity or number of stripe signals larger than the noise threshold is deleted to obtain the plurality of second images. As the residual images, the second images can reduce the impact of stripe signals on shading interference detection, and can reduce the number of residual images, so that shading interference detection is performed on a smaller number of residual images, thereby improving the efficiency of shading interference detection.

In an optional embodiment, the plurality of residual images may be determined based on the second images, and the second images may be processed by, for example, signal enhancement or signal noise reduction processing. The plurality of residual images may be determined based on the second images, so that the residual images are more consistent with the detection standard, and the detection of the residual images is more efficient, thus improving the efficiency of shading interference detection.

In an embodiment of the present disclosure, the difference between the first base image and each second base image is calculated respectively, and the plurality of residual images are determined based on the difference calculation result. Since the residual images are obtained by calculating the difference between the first base image and the second base images, the constant signal included in both the first base image and the second base images can be eliminated, so that there is smaller constant signal interference in the residual images. Therefore, obvious shading interference can reduce the impact of constant signal interference on shading interference detection, and improve the accuracy of shading interference detection.

In a possible implementation, when the plurality of second images are selected from the plurality of first images, a mean pixel value of column pixels in the first images may be calculated to obtain a mean column pixel value corresponding to the first images, a mean pixel value of row pixels in the first images may be calculated to obtain a mean row pixel value corresponding to the first images; and corresponding first images with both the mean column pixel value and the mean row pixel value smaller than the noise threshold among the plurality of first images may be determined as the second images.

The constant signal is a stripe signal, for example, a stripe noise generated by sound wave diffraction at an edge of an image, a fixed dead pixel, a stripe noise formed at an edge of the fingerprint sensor or at an edge of a screen when the fingerprint sensor collects a base image, etc. Since the stripe signal is linearly distributed horizontally and/or longitudinally, and is a linear regular signal, the mean pixel value of column pixels and the mean pixel value of row pixels may be calculated for each first image among the plurality of first images, to determine the mean column pixel value and the mean row pixel value. For example, if the first image is a 20*20 image, the mean pixel value of each row among the 20 rows and the mean pixel value of each column among the 20 columns are calculated.

After the mean column pixel value and the mean row pixel value are calculated, they are compared with the preset noise threshold, which may be set as required. It should be understood that the background signal is an irregular signal, and therefore has a smaller impact on the mean row pixel value or the mean column pixel value. However, the stripe signal is a linear regular signal distributed longitudinally or horizontally, and therefore has a greater impact on the mean row pixel value or the mean column pixel value. When the mean pixel value of a row or column of the stripe signal included in the first image is larger than the noise threshold, it proves that a stripe signal is distributed in this row or column, so that corresponding first images with both the mean column pixel value and the mean row pixel value smaller than the noise threshold among the plurality of first images are determined as the second images.

It should be noted that when the mean pixel value of the column pixels in the first images and the mean pixel value of the row pixels in the first images are calculated, the pixels in the first images may be arrayed, and the pixels in the first images may be converted into arrays, for example, a color image is a three-dimensional array, and a grayscale image is a two-dimensional array. After the pixels in the first images are converted into the arrays, the mean pixel value of the column pixels in the first images and the mean pixel value of the row pixels in the first images are calculated.

**In** an embodiment of the present disclosure, the mean pixel value of the row pixels in the first images and the mean pixel value of the column pixels in the first images are calculated, and the first images with both the mean row pixel value and the mean column pixel value smaller than the noise threshold are determined as the second images, so that the plurality of second images may be selected from the plurality of first images, thereby achieving stripe signal detection on the first images. Since the stripe signal is a linear regular signal distributed longitudinally or horizontally, and has a greater impact on the mean pixel value, the stripe signal can be detected by calculating the mean row pixel value and the mean column pixel value, so that fewer stripe signals and less constant signal interference are present in the second images, so that shading interference is more obvious, thereby reducing the impact of constant signal interference on shading interference detection, and improving the accuracy of shading interference detection.

In a possible implementation, when the plurality of residual images are obtained based on the second images, image noise reduction processing may be performed on each second image among the plurality of second images to obtain the plurality of residual images.

It should be understood that image noise reduction processing may be performed on the second images using various targeted image noise reduction processing algorithms, e.g., using a plurality of image noise reduction processing methods or using only one image noise reduction processing method. The specific image noise reduction processing method is not limited in the embodiments of the present disclosure.

It should be noted that since shading interference is generally caused by irregular signals and constant signal interference is generally caused by regular signals, such as a stripe signal, when the second images are denoised, regular signals in the second images are denoised using an image noise reduction processing algorithm, so that the constant signal interference of a smaller intensity is present in the obtained residual images, and shading interference is more obvious, thereby improving the accuracy of shading interference detection on the residual images.

**In** an embodiment of the present disclosure, image noise reduction processing is performed on each second image among the plurality of second images to obtain the plurality of residual images, thereby reducing constant signal interference and other regular signal interference in the residual images. Therefore, if shading interference is present in the residual images, shading interference may be made more obvious, thereby improving the detection accuracy of shading interference, improving the identification speed of shading interference, and improving the detection efficiency of shading interference.

In a possible implementation, the plurality of residual images may be normalized, then feature extraction may be performed on each of the normalized residual images respectively to obtain a feature corresponding to each residual image, the residual image is predicted through at least two fully connected layers based on the feature corresponding to each residual image to obtain a probability that shading interference is present in each residual image, and shading interference prediction is performed on the first base image based on the probability that shading interference is present in each residual image among the plurality of residual images, to obtain a prediction result.

When shading interference prediction is performed on the first base image, each residual image is normalized, for example, the image format of the residual image is converted into an image format that can be inputted into a prediction model. Feature extraction is performed on each residual image by stacking the structure of convolution layers and pooling layers, that is, feature extraction is performed on each normalized residual image through at least two convolution layers and pooling layers, to obtain the feature corresponding to each residual image, and then obtain a classification prediction result by stacking the structure of the fully connected layers, that is, based on the feature corresponding to each residual image, the residual image is predicted through the at least two fully connected layers, to obtain the probability that shading interference is present in each residual image. It should be understood that the feature of the residual image may be a feature matrix or feature vector corresponding to the residual image obtained by, e.g., convolution and pooling.

Based on the probability that shading interference is present in each residual image, the prediction result of the first base image is determined, that is, whether the first base image contains shading interference.

It should be understood that the plurality of residual images are obtained by calculating the difference between the first base image and the plurality of second base images, and since shading interference is present in fewer base images in the base image library, shading interference is present in fewer second base images. Therefore, when the first base image contains shading interference, most residual images among the plurality of residual images contain shading interference.

In an embodiment of the present disclosure, a small-scale convolutional neural network is used to complete image detection, and the residual image is normalized, so that the residual image can be inputted into the prediction model. Feature extraction is performed on the residual image, to determine the feature corresponding to the residual image, so that the probability that shading interference is present in the residual image can be predicted based on the feature corresponding to the residual image, thereby determining the prediction result of the first base image. Since the first base image is predicted using the prediction model, the prediction efficiency is high, and the probability that the first base image contains background is determined based on the plurality of residual images associated with the first base image. Since the plurality of residual images are determined based on the first base image and the plurality of second base images, if shading interference is present in the first base image, shading interference will be present in most of the residual images, and less constant signal interference is present in the residual images, thereby preventing the constant signal from affecting the detection result. Therefore, whether shading interference is present in the first base image can be more accurately determined by determining whether shading interference is present in the plurality of residual images, compared with direct shading interference detection on the first base image.

FIG. 2 is a flowchart of a method for determining a prediction result provided in an embodiment of the present disclosure. As shown in FIG. 2, the prediction result of the first base image can be determined through the following steps 201-204:

Step 201: calculating a mean value of probabilities that shading interference is present in a plurality of residual images.

The mean value of the probabilities that shading interference is present in the plurality of residual images may be calculated following formula (1) below.

$$\mathrm{mean}(A) = \frac{\sum_{i=1}^{n}(A_i)}{n} \qquad\qquad (1)$$

mean(A) is used to represent the mean value, $A_i$ is used to represent a probability that shading interference is present in an i-th residual image, and n is used to represent the number of residual images.

Step 202: calculating a standard deviation of the probabilities that shading interference is present in the plurality of residual images based on the mean value.

The standard deviation of the probabilities that shading interference is present in the plurality of residual images is calculated following formula (2) below.

$$\mathrm{std}(A) = \sqrt{\frac{\sum_{i=1}^{n}(A_i - \mathrm{mean}(A))^2}{n}} \qquad\qquad (2)$$

mean(A) is used to represent the mean value, $A_i$ is used to represent the probability that shading interference is present in the i-th residual image, n is used to represent the number of residual images, and std(A) is used to represent the standard deviation.

Step 203: determining a probability that shading interference is present in the first base image based on the mean value and the standard deviation.

When the first base image carries shading interference, most of the residual images will carry shading interference. The probability that shading interference is present in the first base image is determined based on the mean value and the standard deviation of the probabilities that shading interference is present in the plurality of residual images. For example, the probability that shading interference is present in the first base image may be determined based on the mean value, the standard deviation, a preset mean value threshold, and a preset standard deviation threshold. When both the mean value and the standard deviation are larger than different mean thresholds and standard deviation thresholds, it corresponds to different probabilities that shading interference is present in the first base image.

Step 204: determining that shading interference is present in the first base image, in response to the probability that shading interference is present in the first base image being larger than a preset probability threshold.

A magnitude relationship between the probability that shading interference is present in the first base image and the preset probability threshold is determined, so that when the probability that shading interference is present in the first base image is larger than the preset probability threshold, shading interference being present in the first base image is determined. For example, if the probability threshold is 60%, when the probability that shading interference is present in the first base image is larger than 60%, shading interference being present in the first base image is outputted.

In an embodiment of the present disclosure, the mean value and the standard deviation of the probabilities that shading interference is present in the plurality of residual images are calculated, and then the probability that shading interference is present in the first base image is determined based on the mean value and the standard deviation. Since the mean value can represent the probabilities that shading interference is present in the plurality of residual images, and the standard deviation can represent the stability of shading interference present in the plurality of residual images, whether shading interference is present in the first base image can be accurately predicted based on the mean value and the standard deviation of the probabilities that shading interference is present in the plurality of residual images, thereby improving the accuracy of shading interference detection.

In a possible implementation, when the probability that shading interference is present in the first base image is determined based on the mean value and the standard deviation, weighted summation may be performed on the mean value and the standard deviation, and the summation result may be determined as the probability that shading interference is present in the first base image.

The mean value can represent the probabilities that shading interference is present in the plurality of residual images, and the standard deviation can represent the stability of shading interference present in the plurality of residual images. Weighted summation may be performed on the mean value and the standard deviation, for example, following formula (3) below, to calculate the probability that shading interference is present in the first base image.

$$P(A) = \text{mean}(A) * 80\% + \text{std}(A) * 20\% \qquad (3)$$

In an embodiment of the present disclosure, weighted summation is performed on the mean value and the standard deviation of the probabilities that shading interference is present in the plurality of residual images, and the summation result is determined as the probability that shading interference is present in the first base image. Since the mean value can represent the probabilities that shading interference is present in the plurality of residual images, and the standard deviation can represent the stability of shading interference present in the plurality of residual images, both the mean value and the standard deviation can be taken into account by weighted summation. Whether shading interference is present in the first base image can be accurately predicted based on the mean value and the standard deviation of the probabilities that shading interference is present in the plurality of residual images, thereby improving the accuracy of shading interference detection.

In a possible implementation, when base images stored in the base image library is equal to a preset image number threshold and the base image library receives at least one third base image, the first base images are ranked in descending order of probability that shading interference is present, first base images corresponding to N top-ranked probabilities are deleted, and the at least one third base image is saved in the base image library, wherein N is a positive integer greater than or equal to 1, and N is equal to the number of third base images.

When the probability that shading interference is present in the first base image is smaller than or equal to the probability threshold, the first base image is associated with the probability that shading interference is present in the first base image, and then returned to the base image library. When the number of base images stored in the image library reaches an upper limit, that is, when the number of base images reaches a preset number threshold of base images, if a plurality of third base images, i.e., a plurality of new base images, are received, the first base images are ranked in descending order of probability that shading interference is present, equivalent to ranking the first base images based on probabilities that shading interference is present in the first base images, because the first base images are associated with the probabilities that shading interference is present in the first base images.

N top-ranked first base images are deleted, that is, N first base images with higher probabilities that shading interference is present in the first base images are deleted to save the new third base images. Therefore, N is a positive integer greater than or equal to 1, and N is equal to the number of third base images.

When the number of newly added third base images reaches a certain value, or after a certain period of time since last shading interference detection, the method for optimizing a base image library in any one of the above embodiments will be re-executed, and a base image with a higher probability that shading interference is present included in the base image library will be deleted from the base image library. For example, if it is detected that shading interference is present in one of the newly added third base images, the third base image will be deleted. If it is detected that shading interference is not present in the newly added third base image, but when the number of base images saved in the base image library exceeds the image number threshold and a new fourth base image is received, if a probability that the third base image contains shading interference is high, the third base image will be deleted to save the new fourth base image. That is, the method for optimizing a base image library in any one of the above embodiments is iterative optimization.

In an embodiment of the present disclosure, when the number of base images saved in the base image library exceeds the image number threshold and a new base image is received, a first base image with a higher probability that shading interference is present is deleted, thereby ensuring low probabilities that shading interference is present in base images in the base image library, ensuring that there is no shading interference when collected fingerprint images are corrected, avoiding the impact of shading interference when the collected fingerprint images are corrected, and improving the accuracy of fingerprint identification.

In a possible implementation, the plurality of residual images may be inputted into a pre-trained shading interference detection network, to obtain a prediction result on whether shading interference is present in the first base image outputted from the shading interference detection network.

shading interference detection may be performed on the first base image through the pre-trained neural network model. Specifically, the plurality of residual images may be inputted into the background detection network, for example, the plurality of residual images are inputted into, e.g., a recurrent neural network. The shading interference detection network can directly predict the plurality of residual images to determine whether shading interference is present in the first base image. The network model can directly output the prediction result on whether shading interference is present in the first base image.

In an embodiment of the present disclosure, all residual images are detected directly through the pre-trained shading interference detection network, to output whether shading interference is present in the first base image, thereby achieving shading interference prediction on the first base image, and achieving a higher prediction efficiency because of no need for predicting each residual image separately, compared with the shading interference prediction in the foregoing embodiments.

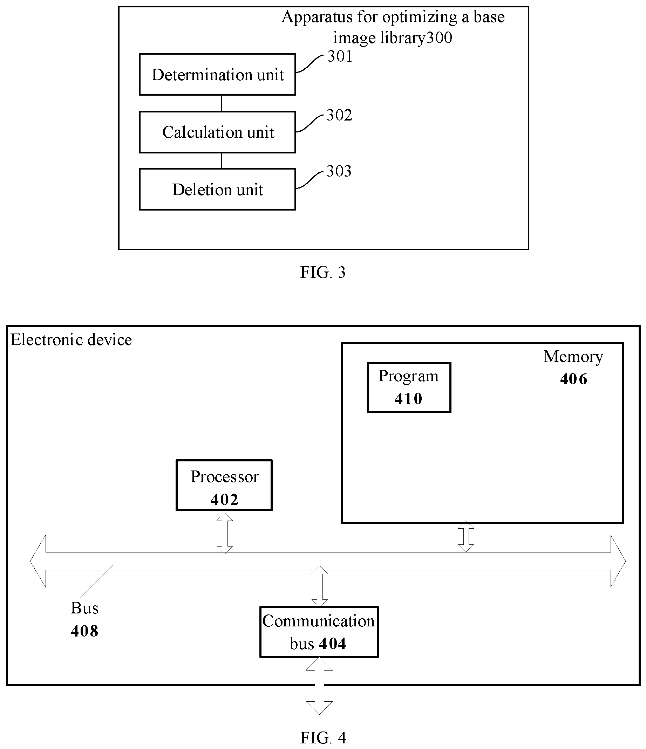

FIG. 3 is a schematic diagram of an apparatus for optimizing a base image library provided in an embodiment of the present disclosure. As shown in FIG. 3, the apparatus 300 comprises:

a determination unit 301 configured to determine a first base image and a plurality of second base images from the base image library, wherein the base image library comprises a plurality of base images collected by a fingerprint sensor from a detection region without a detection object, and the first base image is different from the second base images;

a calculation unit 302 configured to calculate a difference between the first base image and each of the plurality of second base images respectively, and obtain a plurality of residual images based on the calculation result; and

a deletion unit 303 configured to delete, in response to determining based on the plurality of residual images that shading interference is present in the first base image, the first base image from the base image library.

In an embodiment of the present disclosure, the determination unit 301 can be used to execute step 101 in the above method embodiments, the calculation unit 302 can be used to execute step 102 in the above method embodiments, and the deletion unit 303 can be used to execute step 103 in the above method embodiments.

In a possible implementation, the determination unit 301 may be further configured to perform signal interference detection on the plurality of base images included in the base image library, determine a base image with a signal interference detection result greater than a signal interference threshold as the first base image, and determine base images with signal interference detection results smaller than or equal to the signal interference threshold as the second base images.

In a possible implementation, the calculation unit 302 may be further configured to calculate the difference between the first base image and each of the plurality of second base images respectively to obtain a plurality of first images, and determine the plurality of first images as the residual images respectively; or select a plurality of second images from the plurality of first images, wherein an intensity or number of stripe signals included in the second images is smaller than a preset noise threshold, and determine the plurality of second images as the residual images respectively; or obtain the plurality of residual images based on the plurality of second images.

In a possible implementation, the calculation unit 302 may be further configured to calculate a mean pixel value of pixels in each column in the first images to obtain a mean column pixel value corresponding to the first images; calculate a mean pixel value of pixels in each row in the first images to obtain a mean row pixel value corresponding to the first images; and determine corresponding first images with both the mean column pixel value and the mean row pixel value smaller than the noise threshold among the plurality of first images as the second images.

In a possible implementation, the calculation unit 302 may be further configured to perform image noise reduction processing on each second image among the plurality of second images to obtain the plurality of residual images.

In a possible implementation, the deletion unit 303 may be further configured to normalize the plurality of residual images; perform feature extraction on each of the normalized residual images respectively to obtain a feature corresponding to each residual image; and predict the residual image through at least two fully connected layers based on the feature corresponding to each residual image to obtain a probability that shading interference is present in each residual image, and perform shading interference prediction on the first base image based on the probability that shading interference is present in each residual image among the plurality of residual images, to obtain a prediction result.

In a possible implementation, the deletion unit 303 may be further configured to calculate a mean value of probabilities that shading interference is present in the plurality of residual images; calculate a standard deviation of the probabilities that shading interference is present in the plurality of residual images based on the mean value; determine a probability that shading interference is present in the first base image based on the mean value and the standard deviation; and determine that shading interference is present in the first base image, in response to the probability that shading interference is present in the first base image being larger than a preset probability threshold.

In a possible implementation, the deletion unit 303 may be further configured to perform weighted summation on the mean value and the standard deviation, and determine the weighted summation result as the probability that shading interference is present in the first base image.

In a possible implementation, the deletion unit 303 may be further configured to rank, in response to the number of base images stored in the base image library being equal to a preset image number threshold and the base image library receiving at least one third base image, the first base images in descending order of probability that shading interference is present, delete first base images corresponding to N top-ranked probabilities, and save the at least one third base image in the base image library, wherein N is a positive integer greater than or equal to 1, and N is equal to the number of third base images.

In a possible implementation, the deletion unit 303 may be further configured to input the plurality of residual images into a pre-trained shading interference detection network, to obtain a prediction result outputted from the shading interference detection network which indicates whether shading interference is present in the first base image.

It should be noted that the contents, such as information exchange and execution processes, between the units within the apparatus for optimizing a base image library are based on a same concept as the above embodiments of the method for optimizing a base image library, and the description of the above embodiments of the method for optimizing a base image library may be referred to for specific contents, which will not be repeated here.

Referring to FIG. 4, a schematic structural diagram of an electronic device according to an embodiment of the present disclosure is shown. Specific implementations of the electronic device are not limited in specific embodiments of the present disclosure.

As shown in FIG. 4, the electronic device may include: a processor 402, a communication interface 404, a memory 406, and a communication bus 408, wherein:

the processor 402, the communication interface 404, and the memory 406 complete communication with each other through the communication bus 408.

The communication interface 404 is configured to communicate with other electronic devices or servers.

The processor 402 is configured to execute a program 410, and specifically can execute the relevant steps in the above embodiments of the method for optimizing a base image library.

Specifically, the program 410 may include a program code. The program code comprises computer operation instructions.

The processor 402 may be a central processing unit (CPU), or a Graphics Processing Unit (GPU), or an Application Specific Integrated Circuit (ASIC), or one or more integrated circuits configured to implement embodiments of the present disclosure. One or more processors included in a smart device may be processors of a same type, e.g., one or more CPUs; or one or more GPUs; or may be processors of different types, e.g., one or more CPUs, one or more GPUs, and one or more ASICs.

The memory 406 is configured to store the program 410. The memory 406 may include a high-speed RAM memory, and may further include a non-volatile memory, e.g., at least one disk memory.

The program 410 may specifically be used for causing the processor 402 to execute the method for optimizing a base image library in any one of the above embodiments.

Corresponding description of the corresponding steps and units of the method for optimizing a base image library in any one of the above embodiments may be referred to for specific implementations of the steps in the program 410, which will not be repeated here. Those skilled in the art can clearly understand that, for convenience and simplicity of description, the description of corresponding processes in the above method embodiments may be referred to for specific operating processes of the above-described devices and modules, which will not be repeated here.

In an embodiment of the present disclosure, a first base image and a plurality of second base images are determined from the base image library, a difference between the first base image and each of the second base images is calculated respectively to obtain a plurality of residual images, the plurality of residual images are predicted, thereby determining whether shading interference is present in the first base image, shading interference detection may be performed on base images in the base image library, and first base images with shading interference are deleted from the base image library, thereby ensuring that shading interference is not present in base images of the base image library, so that after the fingerprint sensor collects a fingerprint image, the fingerprint image can be corrected based on a base image without shading interference, thereby ensuring the accuracy of the fingerprint image, and improving the identification accuracy of the fingerprint sensor.

An embodiment of the present disclosure further provides a computer program product, including a computer instruction, the computer instruction instructing a computing device to perform the corresponding operations of any one method in the above method embodiments.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure.

The above method according to the embodiments of the present disclosure may be implemented in hardware or firmware, or be implemented as software or a computer code storable in a recording medium (such as a CD ROM, a RAM, a floppy disk, a hard disk, or a magneto-optical disk), or be implemented as a computer code that is downloaded from a network, is originally stored in a remote recording medium or a non-transitory machine-readable medium, and will be stored in a local recording medium, such that the method described herein may be processed by such software stored on a recording medium using a general-purpose computer, a special-purpose processor, or programmable or dedicated hardware (such as an ASIC or FPGA). It is understandable that a computer, a processor, a microprocessor controller, or programmable hardware includes a storage component (e.g., a RAM, a ROM, or a flash memory) that can store or receive software or a computer code. The method for optimizing a base image library described herein is implemented when the software or the computer code is accessed and executed by the computer, the processor, or the hardware. Further, when a general-purpose computer accesses the code for implementing the method for optimizing a base image library shown herein, the execution of the code converts the general-purpose computer to a special-purpose computer configured to execute the method for optimizing a base image library shown herein.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for each particular application using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

**Claims**

1. A method for optimizing a base image library, comprising:

   determining a first base image and a plurality of second base images from the base image library, wherein the base image library comprises a plurality of base images collected by a fingerprint sensor from a detection region without a detection object;
   calculating a difference between the first base image and each of the plurality of second base images respectively, and obtaining a plurality of residual images based on the calculation result; and
   deleting, in response to determining based on the plurality of residual images that shading interference is present in the first base image, the first base image from the base image library.

2. The method according to claim 1, wherein the determining the first base image and the plurality of second base images from the base image library comprises:
   performing signal interference detection on the plurality of base images included in the base image library, determining a base image with a signal interference detection result greater than a signal interference threshold as the first base image, and determining base images with the signal detection result smaller than or equal to the signal interference threshold as the second base images.

3. The method according to claim 1, wherein the calculating the difference between the first base image and each of the plurality of second base images respectively, and obtaining the plurality of residual images based on the calculation result comprises:

calculating the difference between the first base image and each of the plurality of second base images respectively to obtain a plurality of first images, and determining the plurality of first images as the residual images respectively; or

selecting a plurality of second images from the plurality of first images, wherein an intensity or number of stripe signals included in the second images is smaller than a preset noise threshold, and determining the plurality of second images as the residual images respectively; or

obtaining the plurality of residual images based on the plurality of second images.

4. The method according to claim 3, wherein the selecting the plurality of second images from the plurality of first images comprises:

calculating a mean pixel value of pixels in each column in the first images to obtain a mean column pixel value corresponding to the first images;

calculating a mean pixel value of pixels in each row in the first images to obtain a mean row pixel value corresponding to the first images; and

determining corresponding first images with both the mean column pixel value and the mean row pixel value smaller than the noise threshold among the plurality of first images as the second images.

5. The method according to claim 3, wherein the obtaining the plurality of residual images based on the plurality of second images comprises:
performing image noise reduction processing on each second image among the plurality of second images to obtain the plurality of residual images.

6. The method according to claim 1, wherein the method further comprises:

normalizing the plurality of residual images;

performing feature extraction on each of the normalized residual images respectively to obtain a feature corresponding to each residual image; and

predicting the residual image by at least two fully connected layers based on the feature corresponding to each residual image to obtain a probability that shading interference is present in each residual image, and performing shading interference prediction on the first base image based on the probability that shading interference is present in each residual image among the plurality of residual images, to obtain a prediction result.

7. The method according to claim 6, wherein the performing shading interference prediction on the first base image based on the probability that shading interference is present in each residual image among the plurality of residual images, to obtain the prediction result comprises:

calculating a mean value of probabilities that shading interference is present in the plurality of residual images;

calculating a standard deviation of the probabilities that shading interference is present in the plurality of residual images based on the mean value;

determining a probability that shading interference is present in the first base image based on the mean value and the standard deviation; and

determining that shading interference is present in the first base image, in response to the probability that shading interference is present in the first base image being larger than a preset probability threshold.

8. The method according to claim 7, wherein the determining the probability that shading interference is present in the first base image based on the mean value and the standard deviation comprises:
performing weighted summation on the mean value and the standard deviation, and determining the weighted summation result as the probability that shading interference is present in the first base image.

9. The method according to claim 7, wherein the method further comprises:
ranking, in response to base images stored in the base image library being equal to a preset image number threshold and the base image library receiving at least one third base image, the first base images in descending order of probability that shading interference is present, deleting first base images corresponding to N top-ranked probabilities, and saving the at least one third base image in the base image library, wherein N is a positive integer greater than or equal to 1, and N is equal to a number of third base images.

10. The method according to claim 1, wherein the method further comprises:
inputting the plurality of residual images into a pre-trained shading interference detection network, to obtain a prediction result outputted from the shading interference detection network which indicates whether shading interference is present in the first base image.

11. An apparatus for optimizing a base image library, comprising:

a determination unit configured to determine a first base image and a plurality of second base images from the base image library, wherein the base image library comprises a plurality of base images collected by a fingerprint sensor from a detection region without a detection object, and the first base image is different from the second base images;
a calculation unit configured to calculate a difference between the first base image and each of the plurality of second base images respectively, and obtain a plurality of residual images based on the calculation result; and
a deletion unit configured to delete, in response to determining based on the plurality of residual images that shading interference is present in the first base image, the first base image from the base image library.

12. An electronic device, comprising: a processor, a memory, a communication interface, and a communication bus, wherein the processor, the memory, and the communication interface implement communication with each other through the communication bus; and
the memory is configured to store at least one executable instruction, and the executable instruction causes the processor to execute the method for optimizing a base image library according to any one of claims 1-10.

13. A computer storage medium, storing a computer program thereon, wherein the program, when executed by a processor, implements the method for optimizing a base image library according to any one of claims 1-10.

Determining a first base image and a plurality of second base images from a base image library — 101

Calculating a difference between the first base image and each of the plurality of second base images respectively, and obtaining a plurality of residual images based on the calculation result — 102

Deleting, in response to determining based on the plurality of residual images that shading interference is present in the first base image, the first base image from the base image library — 103

FIG. 1

Calculating a mean value of probabilities that shading interference is present in a plurality of residual images — 201

Calculating a standard deviation of the probabilities that shading interference is present in the plurality of residual images based on the mean value — 202

Determining a probability that shading interference is present in the first base image based on the mean value and the standard deviation — 203

Determining that shading interference is present in the first base image, in response to the probability that base interference is present in the first base image being larger than a preset probability threshold — 204

FIG. 2

Apparatus for optimizing a base image library300

Determination unit — 301

Calculation unit — 302

Deletion unit — 303

FIG. 3

Electronic device

Memory
**406**

Program
**410**

Processor
**402**

Bus
**408**

Communication
bus **404**

FIG. 4

# INTERNATIONAL SEARCH REPORT

| International application No. |
| --- |
| **PCT/IB2024/058868** |

**A. CLASSIFICATION OF SUBJECT MATTER**

See Extra Box

According to International Patent Classification (IPC)

**B. FIELDS SEARCHED**

Minimum documentation searched (classification system followed by classification symbols)

G06T, G06V

Documentation searched other than minimum documentation to the extent that such documents are included in the fields searched

Electronic data base consulted during the international search (name of data base and, where practicable, search terms used)

FAMPAT: calibrate, fingerprint, sensor, image, difference, deviation, residual, blank, background, moire, interference, noise, remove, 校正, 指纹, 传感器, 图像, 差值, 差异, 残差, 空, 背景, 底纹, 干扰, 噪声, 删除 and similar keywords

**C. DOCUMENTS CONSIDERED TO BE RELEVANT**

| Category* | Citation of document, with indication, where appropriate, of the relevant passages | Relevant to claim No. |
| --- | --- | --- |
| X | US 2021/0042496 A1 (CHOE, J. et al.), 11 February 2021, non-Chinese original document, paragraphs [0006]-[0008], [0039], [0049], [0076], [0092]-[0137] and [0153]-[0177], and figures 1 and 7-10 | 1-13 |
| A | CN 107454963 A (SHENZHEN GOODIX TECHNOLOGY CO., LTD.), 08 December 2017, entire document | - |

☒ Further documents are listed in the continuation of Box C.     ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of the issuance of the international search report |
| --- | --- |
| 15 October 2024 | 17 October 2024 |

| Name and mailing address of the ISA/SG | Authorized officer |
| --- | --- |
| **Intellectual Property Office of Singapore**<br>1 Paya Lebar Link, #11-03<br>PLQ 1, Paya Lebar Quarter<br>Singapore 408533<br>E-mail: pct@ipos.gov.sg | LIN, Yonghua<br><br>IPOS Telephone No. (+65) 6339 8616 |

Form PCT/ISA /210 (second sheet) (July 2022)

# INTERNATIONAL SEARCH REPORT

International application No.

**PCT/IB2024/058868**

**C (Continuation).      DOCUMENTS CONSIDERED TO BE RELEVANT**

| Category* | Citation of document, with indication, where appropriate, of the relevant passages | Relevant to claim No. |
|---|---|---|
| A | CN 115690432 A (KUNSHAN GOVISIONOX OPTOELECTRONICS CO., LTD.), 03 February 2023, entire document | - |
| A | US 2021/0224574 A1 (YANG, C. et al.), 22 July 2021, non-Chinese entire original document | - |

Form PCT/ISA /210 (continuation of second sheet (1)) (July 2022)

## INTERNATIONAL SEARCH REPORT
### Information on patent family members

International application No.

**PCT/IB2024/058868**

Note: related known patent family members of the patent documents referred to by this international search report are listed in this annex. This authority only provides information on the related patent family members, and assumes no responsibility for the details of the patents.

| Patent Documents referred in the Report | Publication Date/Announcement Date (day/month/year) | Patent Family | Publication Date/Announcement Date (day/month/year) |
|---|---|---|---|
| US 2021/0042496 A1 | 11/02/2021 | KR 10-2021-0017269 A | 17/02/2021 |
| | | WO 2021/025421 A1 | 11/02/2021 |
| CN 107454963 A | 08/12/2017 | EP 3435280 A1 | 30/01/2019 |
| | | WO 2018/227514 A1 | 20/12/2018 |
| CN 115690432 A | 03/02/2023 | None | |
| US 2021/0224574 A1 | 22/07/2021 | None | |

Form PCT/ISA/210 (patent family annex) (July 2022)

# INTERNATIONAL SEARCH REPORT

| International application No. |
| --- |
| **PCT/IB2024/058868** |

**EXTRA BOX**

**(CLASSIFICATION OF SUBJECT MATTER)**

International Classification Symbol:

*G06T 5/50 (2006.01)*

*G06T 5/70 (2024.01)*

*G06V 10/30 (2022.01)*

*G06V 40/12 (2022.01)*

*G06V 10/82 (2022.01)*

Form PCT/ISA /210 (extra sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202410177012 A